# EUROPÄISCHE PATENTANMELDUNG

(11) **EP 0 971 078 A2**
(43) Veröffentlichungstag der Anmeldung: **12.01.2000**
(21) Anmeldenummer: 99112649.1
(22) Anmeldetag: 02.07.1999
(51) Int. Cl.: E02F 9/02

(54) **Erdbewegungsmaschine**

(30) Priorität: 10.07.1998 DE 19830879
(71) Anmelder: Meinl Baumaschinen GmbH, 86415 Mering (DE)
(72) Erfinder: Meinl, Walter, 86415 Mering (DE)
(74) Vertreter: Munk, Ludwig, Dipl.-Ing.

(57) **Zusammenfassung**

Bei einer Erdbewegungsmaschine, insbesondere Minidumper, mit einem ein Raupenlaufwerk aufweisenden Fahrgestell (1), auf dem ein kippbarer Container (4) und ein ein vorzugsweise als Schaufel (5) ausgebildetes Werkzeug tragender Schwenkarm (6) aufgenommen sind, lassen sich dadurch eine Kleinbauweise sowie eine hohe Funktionssicherheit und Zuverlässigkeit erreichen, dass die Raupen (16) des Raupenlaufwerks jeweils zwei gegeneinander geneigte Auflageflächen (21,22) aufweisen, wobei die hintere, kürzere Auflagefläche (22) von der vorderen, längeren Auflagefläche (21) nach oben weggeneigt ist.

## Beschreibung

Die Erfindung betrifft eine Erdbewegungsmaschine, insbesondere einen Minidumper, mit einem ein Raupenlaufwerk aufweisenden Fahrgestell, auf dem ein kippbarer Container und ein ein vorzugsweise als Schaufel ausgebildetes Werkzeug tragender Schwenkarm aufgenommen sind.

Bei den bekannten Anordnungen dieser Art sind den Raupen des Raupenlaufwerks jeweils mehrere, auf gleicher Höhe angeordnete und gleichen Durchmesser aufweisende Laufrollen zugeordnet, von denen eine äußere Laufrolle angetrieben und die jeweils gegenüberliegende äußere Laufrolle als Spannrolle ausgebildet ist. Dabei ergibt sich eine von der vorderen bis zur hinteren Laufrolle eben durchgehende Auflagefläche, die bereits im Falle einer leichten Kippbewegung der zugehörigen Erdbewegungsmaschine weitgehend vom Untergrund abgehoben wird und die Bodenhaftung verliert. In diesem Zusammenhang ist zu berücksichtigen, dass beispielsweise beim Einstechen einer auf dem Schwenkarm aufgenommenen Schaufel in den Boden im Bereich vor der Erdbewegungsmaschine Kräfte mit nach oben gerichteter Komponente auftreten, welche die Erdbewegungsmaschine vorne anheben können. In diesem Fall ist bei den bekannten Anordnungen nur noch eine Abstützung im Bereich der hinteren Laufrolle und damit nur noch eine äußerst geringe Bodenhaftung gegeben. Es können daher nur vergleichsweise geringe Traktionskräfte vom Fahrwerk auf den Boden übertragen werden, so dass die Schaufel unter Umständen nicht zuverlässig zum Eingriff mit dem aufzunehmenden Material gebracht werden kann.

Um dem entgegen zu wirken, wurde bisher vielfach eine vergleichsweise schwere Bauweise bevorzugt, was jedoch einer Kompaktheit und Miniaturisierung der Gesamtanordnung entgegensteht. Insbesondere bei Maschinen, die im Außen- und Innenbereich von Gebäuden einsetzbar sein sollen, ist eine schwere Bauweise unerwünscht. Ein weiterer Nachteil der bekannten Anordnungen ist darin zu sehen, dass bei auf dem Untergrund aufliegendem Raupenfahrwerk in Folge der vergleichsweise großen Länge der Auflagefläche die Lenkbewegungen vergleichsweise schwer sind, was durch eine schwere Bauweise noch verschärft wird und insbesondere auch einen Einsatz im Innenbereich von Gebäuden erschwert.

Hiervon ausgehend ist es daher die Aufgabe der vorliegenden Erfindung, eine Erdbewegungsmaschine eingangs erwähnter Art mit einfachen und kostengünstigen Mitteln so zu verbessern, dass eine vergleichsweise kompakte und leichte Bauweise möglich ist und dennoch eine hohe Funktionssicherheit und Zuverlässigkeit gewährleistet sind.

Diese Aufgabe wird erfindungsgemäß dadurch gelöst, dass die Raupen des Raupenlaufwerks jeweils zwei gegeneinander geneigte Auflageflächen aufweisen, wobei die hintere, kürzere Auflagefläche von der vorderen, längeren Auflagefläche nach oben weggeneigt ist.

Mit diesen Maßnahmen werden die eingangs geschilderten Nachteile der bekannten Anordnungen vollständig vermieden. Die erfindungsgemäße Geometrie des Raupenlaufwerks mit einer abgewinkelten Unterseite stellt sicher, dass für jeden Betriebsfall gute Betriebsbedingungen erreicht werden. Im Normalbetrieb haben die vorderen Auflageflächen Bodenkontakt, wobei die hinteren Auflageflächen frei sind. Die zweckmäßig als Antriebsrollen fungierenden hinteren Umlenkrollen sind dabei vom Untergrund abgehoben, was sich vorteilhaft auf die Vermeidung von Verschleiß auswirkt. Gleichzeitig wird dadurch die Lenkbarkeit erleichtert. Sofern die gesamte Anordnung vorne etwas angehoben wird, liegt das Raupenlaufwerk auf den hinteren Auflageflächen der Raupen auf Dies erleichtert nicht nur die Überwindung großer Steigungen wie Treppen etc., sondern stellt auch sicher, dass beispielsweise beim Eindrücken einer am Schwenkarm aufgenommenen Schaufel in den Untergrund große Traktionskräfte auf den Boden übertragen können, so dass die Schaufel zuverlässig zum Eingriff mit dem aufzunehmenden Gut gebracht werden kann. Auf eine schwere Bauweise kann daher in vorteilhafter Weise verzichtet werden. Vielmehr ist eine leichte und kompakte Bauweise möglich. Die erfindungsgemäße Erdbewegungsmaschine kann daher ohne weiteres so weit miniaturisiert werden, dass eine Durchfahrt durch Türöffnungen mit normaler lichter Weite möglich ist, was eine Verwendbarkeit im Außen- und Innenbereich von Gebäuden sicherstellt. Dies wird durch die leichte Bauweise und die gute Treppengängigkeit noch unterstützt. Bei weichem Untergrund, in den die Raupen leicht einsinken, kommen beide Auflageflächen zum Tragen, so dass auch in diesem Fall eine hohe Funktionssicherheit gewährleistet wird.

Vorteilhafte Ausgestaltungen und zweckmäßige Fortbildungen der übergeordneten Maßnahmen sind in den Unteransprüchen angegeben. So kann die Neigung der hinteren Auflagefläche gegenüber der vorderen Auflagefläche zweckmäßig etwa 5° betragen. Hierdurch ist sichergestellt, dass bei weichem Untergrund beide Auflageflächen zuverlässig zum Tragen kommen, wodurch eine geringe Flächenpressung erreicht wird.

Eine weitere vorteilhafte Maßnahme kann darin bestehen, dass die Länge der hinteren Auflagefläche etwa ein Drittel der vorderen Auflagefläche beträgt. Dies ergibt eine günstige Lage des Knickbereichs und damit des Kippbereichs, so dass kein ruckartiger Übergang von der vorderen auf die hintere Auflagefläche zu befürchten ist.

In vorteilhafter Ausgestaltung der übergeordneten Maßnahmen kann die vordere Auflagefläche, die durch zwei als Umlenkrollen fungierende Laufrollen begrenzt ist, parallel zum oberen Raupentrum verlaufen, das durch eine vordere Spannrolle und eine hintere Antriebsrolle begrenzt ist, deren Durchmesser größer als der Durchmesser der Spannrolle und kleiner als der Abstand zwischen dem Obertrum und der hierzu parallelen vorderen Auflagefläche ist. Diese Maßnahmen ergeben einen vergleichsweise großen Durchmesser der als hintere Umlenkrolle fungierenden Antriebsrolle und ermöglichen somit trotz leichter Bauweise einen günstigen Kraftfluß. Dennoch ist die Antriebsrolle in Normalbetrieb vom Untergrund abgehoben, was sich günstig auf die Verschleißvermeidung auswirkt. Die der Antriebsrolle gegenüberliegende, kleinere Spannrolle sorgt nicht nur für eine zuverlässige Spannung der zugeordneten Raupe, sondern ergibt im vorderen Bereich einen schrägen Raupenanstieg, was die Überwindung von Hindernissen, wie Schwellen, Treppen und dergleichen erleichtert.

In weiterer Fortbildung der übergeordneten Maßnahmen kann auf dem Fahrgestell ein nach vorne kippbarer Schwenkrahmen angeordnet sein, der den Container trägt und auf dem der das Werkzeug tragende Schwenkarm um mindestens 90° von einer stehenden Entleerstellung in eine liegende Arbeitsstellung schwenkbar aufgenommen sind. Der Schwenkrahmen ermöglicht nicht nur eine schonende Kraftübertragung, sondern stellt zusammen mit seinen Auf- und Anbauten eine vormontierbare und bei Bedarf austauschbare Baugruppe dar, was die Herstellung erleichtert.

Vorteilhaft kann das vorzugsweise als Schaufel ausgebildete Werkzeug gegenüber dem Schwenkarm ausgehend von einer mittleren Arbeitsstellung in beiden Richtungen um etwa 90° verschwenkbar angeordnet sein. Dies erleichtert ein Abwerfen des aufgenommenen Guts sowohl nach vorne als auch nach hinten, wodurch eine hohe Variabilität bezüglich der Eigenschaften des aufzunehmenden Guts erreicht wird und gleichzeitig eine gleichmäßige Beladung des Containers erreicht werden kann.

Eine weitere vorteilhafte Maßnahme kann darin bestehen, dass auf dem Fahrgestell hinter dem Container ein zumindest einen Motor enthaltendes, schallgedämpftes Gehäuse aufgenommen ist, das einen rückwärtigen Deckel aufweist, der mit einer in Fahrzeuglängsrichtung verschiebbaren Montageplattform verbunden ist, auf welcher zumindest ein Motor aufgenommen ist. Dies ergibt in vorteilhafter Weise eine Schubladenanordnung, durch die der Motor für Wartungszwecke etc. aus dem Dämpfungsgehäuse herausgefahren werden kann. Dieses kann daher sehr kompakt ausgeführt sein, was für die insgesamt erwünschte, kompakte Bauweise sehr förderlich ist.

Eine weitere, besonders zu bevorzugende Maßnahme kann darin bestehen, dass auf dem Gehäuse ein Steuerpult angeordnet ist, dem ein wegklappbares Trittbrett zugeordnet ist und dass im Bereich des Steuerpults ein Radioempfänger angeordnet ist, der mittels eines zugeordneten Senders ansteuerbar ist, der wahlweise an den Empfänger ansteckbar oder tragbar ist. Hierdurch wird sichergestellt, dass die erfindungsgemäße Maschine wahlweise direkt vom Trittbrett aus oder ferngesteuert bedient werden kann. Hierdurch hat die Bedienungsperson die Möglichkeit, in jedem Fall die Position einzunehmen, die beste Sichtverhältnisse und höchste Sicherheit gewährleistet.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Seitenansicht eines erfindungsgemäßen Minidumpers,
- Figur 2: eine Teilansicht der Anordnung gemäß Figur 1 mit freigelegtem Motor,
- Figur 3: ein Antriebs- und Steuerschema der Anordnung gemäß Figur 1 und
- Figur 4: ein Einsatzbeispiel des erfindungsgemäßen Minidumpers.

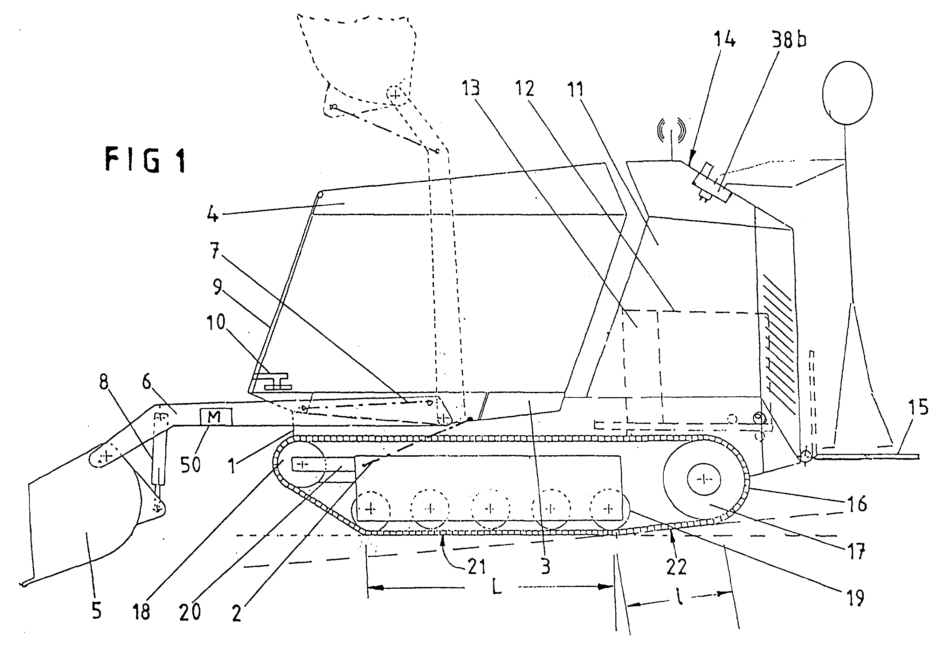

Der der Figur 1 zugrundeliegende Minidumper bildet eine kleine Erdbewegungsmaschine zum Graben, Laden, Transportieren, Schütten, Planieren etc. Erdbewegungsarbeiten dieser Art können sowohl im Außenbereich von Gebäuden, beispielsweise im Landschaftsbau, als auch im Innenbereich von Gebäuden, beispielsweise bei Abbruch- und/oder Sanierungsarbeiten vorkommen. Der vorliegende Minidumper ist daher so konzepiert und dimensioniert, dass er im Außen- und im Innenbereich von Gebäuden Verwendung finden kann. Dementsprechend beträgt die Gesamtbreite 850 mm, so dass eine Durchfahrt durch Türöffnungen mit normaler lichter Weite ohne weiteres möglich ist.

Der dargestellte Mindumper besitzt ein mit einem Raupenfahrwerk versehenes Fahrgestell 1, auf dem ein mittels eines Hydraulikzylinders 2 bewegbarer, um eine im vorderen Bereich vorgesehene horizontale Achse schwenkbarer Schwenkrahmen 3 aufgenommen ist. Dieser trägt einen Container 4 und einen mit einem hier als Schaufel 5 ausgebildeten Werkzeug versehenen Schwenkarm 6. Der Schwenkarm 6 ist mittels eines Hydraulikzylinders 7 um eine horizontale Achse von einer in Figur 1 mit durchgezogenen Linien gezeichneten, liegenden Arbeitsstellung um etwa 90° in eine in Figur 1 mit unterbrochenen Linien angedeutete, stehende Entleerstellung bewegbar, in welcher sich die Schaufel 5 oberhalb des Containers 4 befindet. Die Schaufel 5 ist ihrerseits um eine horizontale Achse schwenkbar auf dem Schwenkarm 6 gelagert und mittels eines Hydraulikzylinders 8 ausgehend von einer mittleren, in Figur 1 mit durchgezogenen Linien gezeichneten Arbeitsstellung um etwa 90° nach beiden Richtungen schwenkbar, so dass in der Entleerstellung des Schwenkarms der Schaufelinhalt nach vorne oder nach hinten in den Container 4 abgekippt werden kann.

Der durch Anheben des Schwenkrahmens 3 nach vorne kippbare Container 4 ist oben offen. Die vordere Bordwand des Containers 4 ist als um eine im Bereich ihres oberen Rands vorgesehene, horizontale Achse schwenkbar gelagerte Klappe 9 ausgebildet. Im Bereich des unteren Rands ist eine auslösbare Halteeinrichtung 10 vorgesehen, die einfach nach Art einer manuell bedienbaren Bordwandverriegelung ausgebildet sein kann. Der Schwenkarm 6 ist praktisch als Bügel mit zwei den Container 4 flankierenden Schenkeln ausgebildet, so dass der Containerinhalt bei geöffneter Klappe 9 durch Anheben des Schwenkrahmens 3 im vorderen Fahrzeugbereich ungehindert vom Schwenkarm 6 abgeworfen werden kann. Eine Entleerung des Containers 4 ist daher nicht nur bei angehobenem Schwenkarm 6, sondern auch bei abgesenktem Schwenkarm 6 möglich.

Im hinteren Bereich des Fahrgestells 1 ist auf diesem ein Gehäuse 11 angeordnet, in welchem ein Motor 12 und von diesem antreibbare Hydraulikpumpen 13 aufgenommen sind. Das Gehäuse 11 und der Container 4 sind so aneinander angepasst, dass der Container 4 genügend Schwenkraum hat. Hierzu besitzt die dem Gehäuse 11 zugewandte Seite des Containers 4 eine von einer bezüglich seiner Schwenkachse konvexen Kontur abgeleitete Kontur. Die benachbarte Gehäuseseite verläuft mit Abstand parallel. Das Gehäuse 11 ist schallgedämpft, so dass nur wenig Betriebslärm nach außen dringen kann. Die Oberseite des Gehäuses 11 ist als Steuerpult 14 ausgebildet. Diesem ist ein am Fahrgestell 1 aufgenommenes Trittbrett 15 zugeordnet, auf welchem eine Bedienungsperson aufnehmbar ist. Das Trittbrett 15 ist wahlweise hochklappbar, wie durch unterbrochene Linien angedeutet ist.

Das Fahrgestell 1 ruht auf dem oben schon erwähnten Raupenlaufwerk, dessen Raupen 16 jeweils über eine hintere Antriebsrolle 17, eine vordere, einen kleineren Durchmesser als die Antriebsrolle 17 aufweisenden Durchmesser aufweisende Spannrolle 18 und mehrere, in das Untertrum der zugeordneten Raupe 16 eingreifende, eine gemeinsame, zum Obertrum der Raupe 16 parallele, untere Tangentialebene aufweisende Laufrollen 19 geführt ist. Der Spannrollen 18 ist jeweils eine Spanneinrichtung 20 zugeordnet, mittels welcher die jeweils zugeordnete Raupe 16 auf Spannung gehalten wird. Der Achsabstand zwischen Antriebsrolle 17 und Spannrolle 18 beträgt etwa 1500 mm, was zusammen mit der Gesamtbreite von etwa 850 mm eine äußerst kompakte Bauweise ergibt. Zur Bildung der Raupen 16 können endlose, außen profilierte Riemen vorgesehen sein.

Im dargestellten Beispiel sind jeder Raupe 16 fünf gleich große, in einer gemeinsamen, zum Obertrum der Raupe 16 parallelen Ebene angeordnete Laufrollen 19 zugeordnet. Diese sind so positioniert, dass die oben erwähnte, untere Tangentialebene tiefer als der untere Scheitel der Antriebsrolle 17 liegt. Dadurch ergibt sich gegenüber der Tangente an die Antriebsrolle 17 und die Spannrolle 18 eine Auslenkung des Untertrums der Raupe 16 nach unten. Die vordere und hintere Laufrolle 19 fungieren dementsprechend als Umlenkrollen, an denen sich jeweils ein Knick des Untertrums der Raupe 16 ergibt.

Der Raupenbereich zwischen der Spannrolle 18 und der vorderen Laufrolle 19 besitzt in Folge des vergleichsweise kleinen Durchmessers der Spannrolle 18 eine vergleichsweise große Steigung von 30° - 40°. Mit diesem Bereich liegen die Raupen 16 normaler Weise nicht auf dem Untergrund auf Dieser Bereich kommt nur beim Überfahren von Hindernissen, z.B. von Schwellen etc., zum Tragen. Der zum Obertrum parallele Bereich zwischen der vorderen und der hinteren Laufrolle 19 bildet eine vordere Auflagefläche 21, mit welcher sich die Raupen 16 auf dem Untergrund abstützen können. Der Bereich zwischen der hinteren Laufrolle 19 und der Antriebsrolle 16 steigt leicht nach oben an und bildet eine hintere Auflagefläche 22, mit welcher die Raupe 16 auf dem Untergrund zur Auflage kommen, wenn die gesamte Maschine durch entsprechende Kräfte vorne leicht angehoben wird, so dass die vordere Auflagefläche 21 vom Untergrund wegkippt. Dies kann beispielsweise vorkommen, wenn die Schaufel 5 in das Erdreich eingestochen werden soll. Die in Einstechrichtung verlaufende Kraft besitzt eine Horizontalkomponente und eine Vertikalkomponente, wobei die Vertikalkomponente dazu führen kann, dass die gesamte Maschine, wie oben erwähnt, im vorderen Bereich angehoben wird.

Die Laufrollen 19 sind gegenüber der einen vergleichsweise großen Durchmesser aufweisenden Antriebsrolle 17 so viel tiefer gelegt, dass die hintere Auflagefläche 22 gegenüber der vorderen Auflagefläche 21 um einen Winkel von etwa 5° nach oben weggeneigt ist. Hierdurch wird Schaukelbewegungen der gesamten Maschine vorgebeugt. Die Länge l der hinteren Auflagefläche 22 beträgt etwa ein Drittel der Länge L der vorderen Auflagefläche 21. Hierdurch ist sichergestellt, dass auch bei vorne angehobener Maschine vergleichsweise große Traktionskräfte auf das Erdreich übertragen werden können. Andererseits ergibt sich bei der normalen Fahrt, bei der eine Abstützung über die vorderen Auflageflächen 21 erfolgt und die hinteren Auflageflächen 22 frei sind, eine vergleichsweise leichte Lenkbarkeit. Da hierbei aber die Antriebsrollen 17 Bodenfreiheit haben, sind diese keinem nennenswertem Verschleiß ausgesetzt.

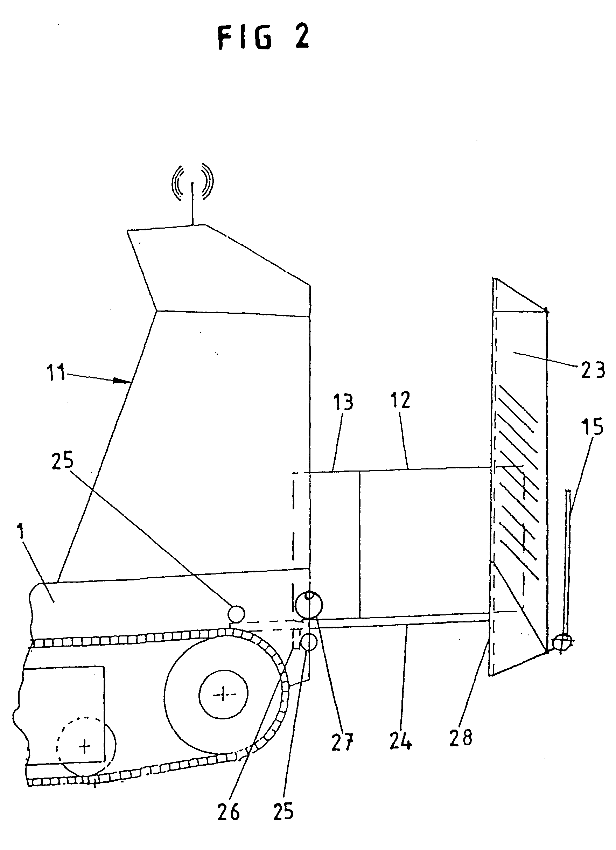

Der Motor 12 ist, wie am besten aus Figur 2 erkennbar ist, aus dem zugeordneten Gehäuse 11 herausfahrbar, was trotz enger Platzverhältnisse innerhalb des kompakten Gehäuses 11 die Wartung erleichtert. Hierzu ist das Gehäuse 11 mit einem rückwärtigem Deckel 23 versehen, der mit einer in Fahrzeuglängsrichtung verschiebbar auf dem Fahrgestell 1 aufgenommenen Montageplattform 24 verbunden ist, auf welcher der Motor 12 und hier die vom Motor 12 antreibbaren Hydraulikpumpen 13 angeordnet sind. Hierdurch ergibt sich praktisch eine Schubladenanordnung, an der auch das Trittbrett 15 befestigt ist. Dieses ist hier am Deckel 23 angebracht. Der Auspuff des Motors 12 kann ein Teleskopstück aufweisen. Dies ermöglicht eine Befestigung am Fahrgestell, ohne dass die Schubladenbewegungen behindert werden. Im dargestellten Beispiel soll der Auspuff des Motors 12 einfach so angeordnet sein, dass er komplett mit dem Motor 12 mitbewegt wird. Hierzu ist der Auspuff gegenüber dem Fahrgestell und anderen stationären Teilen, wie gegenüber dem Gehäuse 11, lose und endet im Bereich der Montageplattform 24 oder des Deckels 23. Die ebenfalls mitbewegten Pumpen 13 können durch bewegliche Hydraulikschläuche mit den zugeordneten Hydraulikaggregaten verbunden sein.

Die Montageplattform 24 ist zweckmäßig als Wanne ausgebildet, so dass Lekageflüssigkeiten zuverlässig aufgefangen werden können. Diese Wanne kann mit seitlichen Randleisten versehen und mit diesen kippsicher auf fahrgestellseitigen Rollen 25 gelagert sein. Zur Begrenzung der Ausfahrbewegung ist ein durch einen Stift oder Schraube etc. gebildeter Anschlag 26 vorgesehen, der in der ausgefahrenen Stellung an eine der Rollen 25 anläuft. In der eingefahrenen Stellung wird die Montageplattform 24 blockiert. Die hierzu vorgesehene Blockiereinrichtung ist im dargestellten Beispiel als Spanneinrichtung ausgebildet, die eine exzentrisch gelagerte Spannrolle 27 aufweist, mittels der die Montageplattform 24 gegenüber einer Rolle 25 bzw. einer anderen Gegenhaltefläche geklemmt werden kann. Die Spannrolle 27 kann einfach einen seitlichen Sechskant zum Ansetzen eines Schlüssel aufweisen. Der an der Montageplattform 24 befestigte Deckel 23 ist gegenüber dem Gehäuse 21 abgedichtet. Hierzu ist ein umlaufender, hier deckelseitig angeordneter Dichtstreifen 28 vorgesehen.

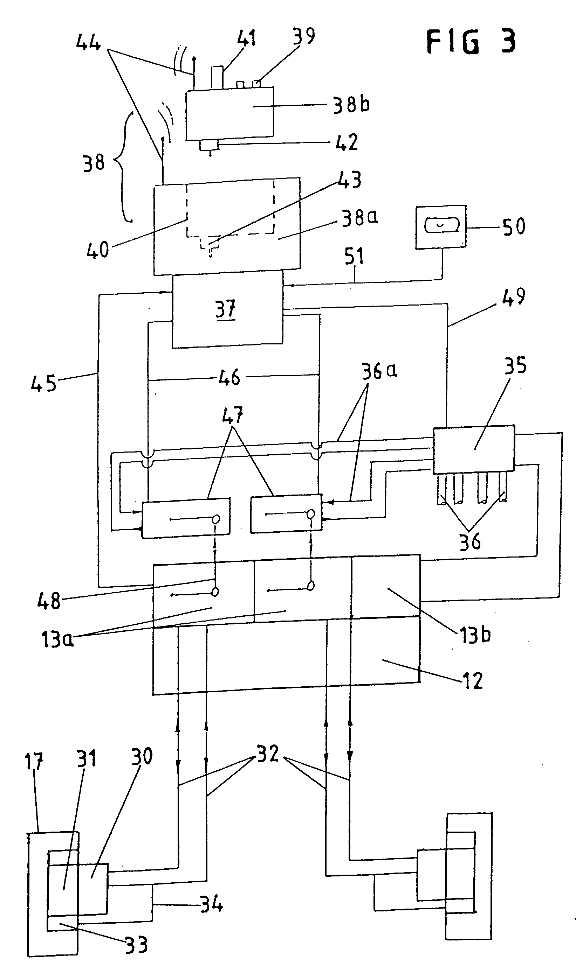

Die Antriebsrollen 17 werden, wie in Figur 3 angedeutet ist, durch einen jeweils zugeordneten, umsteuerbaren Hydraulikmotor 30 angetrieben, der an ein in die Nabe der zugeordneten Antriebsrolle 17 eingebautes Planetengetriebe 31 angesetzt ist. Die umsteuerbaren Hydraulikmotoren 30 werden jeweils von einer zugeordneten, mittels des Motors 12 antreibbaren Pumpe 13a mit Drucköl versorgt. Die Verbindungsleitungen 32 sind, wie oben schon erwähnt, als bewegliche Schläuche ausgebildet. Die Pumpen 13a sind zweckmäßig als Kolbenpumpen ausgebildet. Jedem Antriebsrad 17 ist eine Federdruckbremse 33 zugeordnet, die durch das dem benachbarten, umsteuerbaren Hydraulikmotor 30 zugeführte Drucköl hydraulisch gelüftet wird, wie durch eine von der zugehörigen Leitung 32 abzweigende Stichleitung 34 angedeutet ist. Bei Wegfall des Öldrucks geht die Federdruckbremse 33 automatisch in die Bremsstellung. Hierdurch ist sichergestellt, dass die Maschine auch auf abschüssigem Gelände angehalten werden kann, ohne dass die Gefahr eines ungewollten Wegrollens besteht.

Neben den Pumpen 13a zur Versorgung der umsteuerbaren Hydraulikmotoren 30 ist eine weitere, ebenfalls mittels des Motors 12 antreibbare Pumpe 13b vorgesehen, die das zur Betätigung der Hydraulikzylinder und sonstigen hydraulischen Aggregate benötigte Drucköl erzeugt. Diese Pumpe kann als Zahnradpumpe ausgebildet sein. Der Pumpe 13b ist ein Ventilblock 35 nachgeordnet, von dem zu den einzelnen Hydraulikzylindern und weiter unten noch näher beschriebenen Servoventilen 47 führende Versorgungsleitungen 36, 36a abgehen.

Der Ventilblock 35 und die Pumpen 13a sind mittels einer Kontrolleinrichtung 37 steuerbar, die mittels einer Bedieneinrichtung 38 mit den von der Bedienungsperson gegebenen Befehlen beaufschlagbar ist. Die Bedieneinrichtung 38 enthält ein in das im Bereich der Oberseite des Gehäuses 11 vorgesehene Bedienpult 14 integriertes, einen Radioempfänger aufweisendes Basisteil 38a und ein einen dem Empfänger zugeordneten Sender aufweisendes Bedienteil 38b, das mit für eine manuelle Befehlseingabe geeigneten Bedienungselementen 39 versehen ist. Das Basisteil 38a ist mit einer dem Bedienteil 38b zugeordneten Aufnahmemulde 40 versehen. Das Bedienteil 38b ist wahlweise in die Aufnahmemulde 40 einlegbar bzw. herausnehmbar und als Traggerät verwendbar. Hierzu kann das Bedienteil 38b mit einem Tragelement, beispielsweise in Form eines Tragbügels 41, versehen sein. Die Aufnahmemulde 40 ist so ausgebildet, dass das Bedienteil 38b hierin vollständig versenkbar ist. Hierdurch ist sichergestellt, dass sich bei in die Aufnahmemulde 40 eingesetztem Bedienteil 38b eine ebene Arbeitsfläche im Bereich des Bedienpults 14 ergibt, wie in Figur 1 angedeutet ist.

Solange das Bedienteil 38b in die Aufnahmemulde 40 eingesetzt ist, werden die eingegebenen Befehle über eine Steckverbindung übertragen, über die auch eine Aufladung der Batterien des Bedienteils 38b erfolgen kann. Zur Bildung der Steckverbindung ist, wie Figur 3 weiter zeigt, einerseits ein Stecker 42 und andererseits eine Dose 43 vorgesehen. Wenn das Bedienteil 38b aus der Aufnahmemulde 40 entnommen und als Traggerät benutzt wird, werden die Befehle über Funk übertragen, wie durch beiderseitige Antennen 44 angedeutet ist. Hierdurch wird erreicht, dass die Bedienungsperson die erfindungsgemäße Maschine nicht nur vom Trittbrett 15 aus steuern kann, sondern auch das Trittbrett 15 verlassen und sich in sicherem Abstand von der Maschine bzw. dort wo gute Sichtverhältnisse bestehen, aufhalten kann. Es ergibt sich somit eine hohe Sicherheit. Gleichzeitig erweist sich diese Maßnahme auch in ergonomischer Hinsicht als sehr vorteilhaft und gewährleistet eine hohe Bedienungsfreundlichkeit und einen hohen Bedienungskomfort.

Die vom Basisteil 38a beaufschlagbare Kontrolleinrichtung 37 kann als einen Prozessor enthaltende, speicherprogrammierbare Steuerung (SPS) ausgebildet sein, durch die alle im Bereich der erfindungsgemäßen Maschine vorkommenden Funktionen steuerbar sind. Zur Vermeidung einer Überlastung des Motors 12 wird z.B. der Druck der Pumpen 13a geregelt. Hierzu wird dieser Druck gemessen und die entsprechende Information der einen geeigneten Regler enthaltenden Kontrolleinrichtung 37 zugeführt, wie durch eine Signalleitung 45 angedeutet ist. Die von der Kontrolleinrichtung 37 ausgegebenen Stellsignale werden über Signalleitungen 46 an geeignete Stellglieder 47 gegeben. Diese sind hier als elektrohydraulische Servoventile ausgebildet, die die jeweils zugeordnete Pumpe 13a entsprechend verstellen, wie durch die Verstelleinrichtung 48 angedeutet ist. Der von den genannten Servoventilen 47 benötigte Steueröldruck in Höhe von ca. 25 bar wird, wie schon erwähnt, aus dem der Pumpe 13b nachgeordneten Ventilblock 35 entnommen, wie durch Versorgungsleitungen 36a angedeutet ist. Die Ventile des Ventilblocks 35 können als elektromagnetische Schieber ausgebildet sein, die von der Kontrolleinrichtung 37 direkt ansteuerbar sind, wie durch die Signalleitung 49 angedeutet ist.

In Figur 3 ist auch noch eine über eine Signalleitung 51 an einem zugeordneten Eingang der Kontrolleinrichtung 37 liegende, elektronische Wasserwaage 50 angedeutet. Diese kann beispielsweise, wie aus Figur 1 entnehmbar ist, am Schwenkarm 6 angebracht und als Ist-Wert-Aufnehmer in einen Regelkreis integriert sein, durch den beispielsweise das auf dem Schwenkarm 6 aufgenommene Werkzeug unabhängig von der Stellung des Schwenkarms 6 in einer gewünschten Ausrichtung zur Erdgravitation gehalten werden kann. Der hierfür erforderliche Regler ist ebenfalls in die Kontrolleinrichtung 37 integriert.

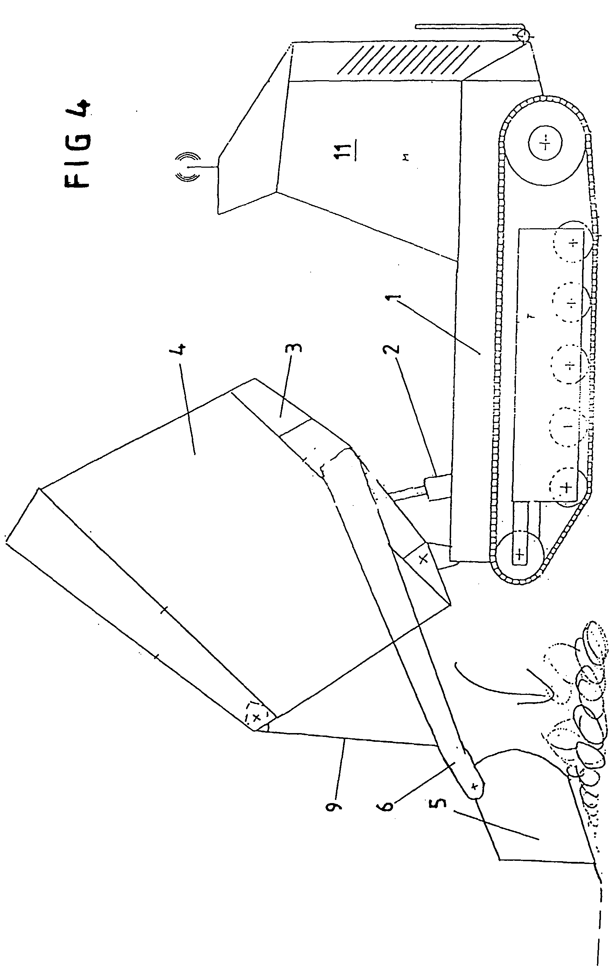

Der erfindungsgemäße Minidumper erweist sich als sehr vielseitig. Der Figur 1 liegt eine Situation zugrunde, in der mit Hilfe der Schaufel 5 ein Loch gegraben und das aufgenommene Schüttgut in den Container 4 eingeworfen wird. Zum Entleeren des Containers 4 wird, wie aus Figur 4 erkennbar ist, die die vordere Bordwand des Containers bildende Klappe 9 gelöst und der den Container 4 aufnehmende Hubrahmen 3 soweit angehoben, dass die Containerfüllung über die von der Klappe 9 freigegebene Öffnung aus dem Container 4 herausrutscht, wie in Figur 4 durch einen Pfeil angedeutet ist. Es ist möglich, den gesamten Containerinhalt auf einmal in Form eines Haufens abzukippen. Dabei ist der die Schaufel 5 tragende Schwenkarm 6 zweckmäßig angehoben. Es ist aber auch denkbar, den Containerinhalt in Form eines Strangs abzuladen. Hierzu wird die Maschine bei angekipptem Container 4 rückwärts bewegt. Ein derartiger Strang kann gleichzeitig oder anschließend mittels der abgesenkten Schaufel 5 planiert werden, wie Figur 4 anschaulich zeigt.

Die Schaufel 5 ist gegen andere Werkzeuge, beispielsweise eine Gabel, austauschbar. Zweckmäßig erfolgt die Kupplung mit dem Schwenkarm 6 über eine sogenannte Schnellkupplung. Bei Verwendung einer Gabel kann es zweckmäßig sein, diese unabhängig von der Stellung des Schwenkarms 6 immer so ausgerichtet zu halten, dass das aufgenommene Gut nicht herunterfällt. Dies wird hier durch den der elektronischen Wasserwaage 50 zugeordneten Regelkreis bewerkstelligt.

## Patentansprüche

1. Erdbewegungsmaschine, insbesondere Minidumper, mit einem ein Raupenlaufwerk aufweisenden Fahrgestell (1), auf dem ein kippbarer Container (4) und ein ein vorzugsweise als Schaufel (5) ausgebildetes Werkzeug tragender Schwenkarm (6) aufgenommen sind, **dadurch gekennzeichnet, dass** die Raupen (16) des Raupenlaufwerks jeweils zwei gegeneinander geneigte Auflageflächen (21,22) aufweisen, wobei die hintere, kürzere Auflagefläche (22) von der vorderen, längeren Auflagefläche (21) nach oben weggeneigt ist.

2. Erdbewegungsmaschine nach Anspruch 1, **dadurch gekennzeichnet, dass** die Neigung der hinteren Auflagefläche (22) gegenüber der vorderen Auflagefläche (21) etwa 5° beträgt und dass die Länge der hinteren Auflagefläche (22) vorzugsweise etwa ein Drittel der Länge der vorderen Auflagefläche (21) beträgt.

3. Erdbewegungsmaschine nach einem der vorhergehenden Ansprüche, **dadurch gekennzeichnet, dass** die vordere Auflagefläche (21), die durch zwei als Umlenkrollen fungierende Laufrollen (19) begrenzt ist, parallel zum oberen Trum der Raupen (16) verläuft, das durch eine vordere Spannrolle (18) und eine hintere Antriebsrolle (17) begrenzt ist, deren Durchmesser größer als der Durchmesser der Spannrolle (18) und kleiner als der Abstand zwischen dem Raupen-Obertrum und der hierzu parallelen, vorderen Auflagefläche (21) ist.

4. Erdbewegungsmaschine nach einem der vorhergehenden Ansprüche, **dadurch gekennzeichnet, dass** der Achsabstand zwischen Antriebsrolle (17) und Spannrolle (18) etwa 1500 mm und die Maschinenbreite etwa 850 mm betragen.

5. Erdbewegungsmaschine nach einem der vorhergehenden Ansprüche, **dadurch gekennzeichnet, dass** die Antriebsrollen (17) jeweils durch einen umsteuerbaren Hydraulikmotor (30) antreibbar sind, der an ein in die Nabe der zugeordneten Antriebsrolle (17) eingebautes Planetengetriebe (31) angesetzt ist und dass den Antriebsrollen (17) jeweils eine hydraulisch lüftbare Federdruckbremse (33) zugeordnet ist.

6. Erdbewegungsmaschine nach einem der vorhergehenden Ansprüche, **dadurch gekennzeichnet, dass** auf dem Fahrgestell (1) ein nach vorne kippbarer Schwenkrahmen (3) angeordnet ist, der den vorzugsweise eine vordere, schwenkbar angeordnete Klappe (9) aufweisende Container (4) trägt und auf dem der das Werkzeug tragende Schwenkarm (6) um mindestens 90° von einer liegenden Arbeitsstellung in eine stehende Entleerstellung schwenkbar aufgenommen ist.

7. Erdbewegungsmaschine nach einem der vorhergehenden Ansprüche, **dadurch gekennzeichnet, dass** das vorzugsweise als Schaufel (5) ausgebildete Werkzeug gegenüber dem Schwenkarm (6) ausgehend von einer mittleren Arbeitsstellung in beiden Richtungen um etwa 90° verschwenkbar ist.

8. Erdbewegungsmaschine nach einem der vorhergehenden Ansprüche, **dadurch gekennzeichnet, dass** auf dem Fahrgestell (1) hinter dem Container (4) ein zumindest einen Motor (12) enthaltendes, vorzugsweise schallgedämpftes Gehäuse (11) aufgenommen ist, auf dem ein Steuerpult (14) angeordnet ist, dem ein vorzugsweise wegklappbar angeordnetes Trittbrett (15) zugeordnet ist und dass die einander zugewandten Seiten von Container (4) und Gehäuse (11) bezüglich der Kippachse des Containers (4) konvex oder konvexoid ausgebildet sind.

9. Erdbewegungsmaschine nach einem der vorhergehenden Ansprüche 12 oder 13, **dadurch gekennzeichnet, dass** im Bereich des Steuerpults (14) eine Bedieneinrichtung (38) vorgesehen ist, die ein einen Radioempfänger enthaltendes Basisteil (38a) aufweist, dem ein einen Sender enthaltendes Bedienteil (38b) zugeordnet ist, das wahlweise tragbar oder an das Basisteil (38a) ansteckbar ist, wobei das Basisteil (38a) eine dem Bedienteil (38b) zugeordnete Aufnahmemulde (40) aufweist und wobei im Bereich der in Einführrichtung vorderen Seite der Aufnahmemulde (40) und der dieser zugeordneten Seite des Bedienteils (38b) Elemente (42,43) einer Steckverbindung vorgesehen sind und dass das Basisteil (38a) am Eingang einer vorzugsweise als speicherprogrammierbare Steuerung ausgebildeten Kontrolleinrichtung (37) liegt, mittels welcher alle Funktionen steuerbar sind.

10. Erdbewegungsmaschine nach einem der vorhergehenden Ansprüche, **dadurch gekennzeichnet, dass** das Gehäuse (11) einen rückwärtigen Deckel (23) aufweist, der mit einer in Fahrzeuglängsrichtung verschiebbar angeordneten Montageplattform (24) verbunden ist, auf der zumindest der Motor (12), vorzugsweise der Motor (12) und von diesem antreibbare Pumpen (13a,b), aufgenommen ist bzw. sind.
